# EUROPÄISCHE PATENTSCHRIFT

(11) **EP 2 837 315 B1**
(45) Veröffentlichungstag und Bekanntmachung des Hinweises auf die Patenterteilung: **30.03.2016**
(21) Anmeldenummer: 13180562.4
(22) Anmeldetag: 15.08.2013
(51) Int. Cl.: A47J 45/06, A47J 45/07

(54) **Kochgeschirr**
Cookware
Batterie de cuisine

(43) Veröffentlichungstag der Anmeldung: 18.02.2015
(73) Patentinhaber: AMT Alumetall Gießtechnik GmbH, 58579 Schalksmühle (DE)
(72) Erfinder: Möhl, Harald, 58515 Lüdenscheid (DE)
(74) Vertreter: Patentanwälte Dörner & Kötter PartG mbB

(56) Entgegenhaltungen:
- CH-B1- 697 637
- DE-B1- 2 264 244
- DE-U1- 8 517 666

## Beschreibung

Die Erfindung betrifft ein Kochgeschirr, insbesondere einen Kochtopf, einen Bräter oder eine Pfanne, umfassend ein Gefäßteil, an dem wenigstens ein Griffteil lösbar befestigt ist, wie aus Dokument CH 697 637 bekannt.

Kochgeschirre der vorgenannten Art sind vielseitig bekannt. Diese weisen regelmäßig ein metallisches Gefäßteil auf, an dem ein aus Kunststoff oder einem anderen nicht wärmeleitenden Material hergestelltes Griffteil angebracht ist, welches üblicherweise mittels Schrauben an dem Gefäßteil fixiert ist.

Nachteilig an den bekannten Kochgeschirren ist, dass deren Montage sich aufwendig gestaltet. Zudem kann es zu einem unbeabsichtigten Lösen des Griffteils kommen, wodurch Verletzungsgefahren für den Bediener bestehen.

Hier will die Erfindung Abhilfe schaffen. Der Erfindung liegt die Aufgabe zugrunde, ein Kochgeschirr mit wenigstens einem Griffteil bereitzustellen, dass einfach montierbar ist und bei dem eine zuverlässige, lösesichere Fixierung an dem Gefäßteil gewährleistet ist. Gemäß der Erfindung wird diese Aufgabe durch die Merkmale des kennzeichnenden Teils des Patentanspruchs 1 gelöst.

Mit der Erfindung ist ein Kochgeschirr mit wenigstens einem Griffteil geschaffen, welches einfach zu montieren ist und bei dem eine lösefeste Verbindung mit dem Gefäßteil gewährleistet ist. Das Griffteil ist über das in der Aufnahme des Griffteils angeordnete Klemmblech einfach auf das Kupplungsteil aufschiebbar, wo es lösesicher mit diesem verbunden ist. Die lösefeste Verbindung ist durch den nach außen gerichteten federnden Flächenabschnitt, der im spitzen Winkel zur Innenkontur der Aufnahme sowie dem nach innen gerichteten federnden Flächenabschnitt, der im spitzen Winkel zur Außenkontur des Kupplungsteils gerichtet ist, erzielt, wodurch ein Abziehen des Griffteils von dem Kupplungsteil gehemmt ist.

In Weiterbildung der Erfindung sind in jeder Seitenwand wenigstens zwei nach außen gerichtete und zwei nach innen gerichtete federnde Flächenabschnitte angeordnet. Hierdurch ist die Abziehhemmung des Griffteils gegenüber dem Kupplungsteil weiter erhöht.

In Ausgestaltung der Erfindung sind die federnden Flächenabschnitte gewellt ausgebildet. Hierdurch ist eine gute Federwirkung erzielt, wodurch kontinuierlicher Andruck der Flächenabschnitte gegen die Innenkontur der Aufnahme beziehungsweise die Außenkontur des Kupplungsteils bewirkt ist. Vorteilhaft sind die wenigstens zwei Flächenabschnitte parallel zueinander angeordnet.

In weiterer Ausgestaltung der Erfindung ist in wenigstens zwei Seitenwänden des Klemmblechs jeweils eine Ausnehmung eingebracht, bei der zwei gegenüberliegende Kanten in entgegengesetzter Richtungen gewölbt ausgebildet sind, wodurch zwei entgegengesetzt gerichtete federnde Abschnitte gebildet sind. Hierdurch ist eine einfache Herstellung der entgegengesetzt abgewinkelten Flächenabschnitte erzielt. Bevorzugt sind die Ausnehmungen rechteckförmig ausgebildet.

In Weiterbildung der Erfindung ist an dem Klemmblech an seinem dem Griffteil zugewandten Ende zumindest ein nach innen abgewinkelter Flügel angeformt, der an dem nach außen gerichteten freien Ende des Kupplungsteils anliegt. Hierdurch ist eine definierte Endstellung des Klemmblechs bei der Montage erzielt.

In weiterer Ausgestaltung der Erfindung ist das Kupplungsteil bolzenförmig mit einem pentagonförmigen Querschnitt ausgebildet, wobei das Klemmblech in Art eines pentagonförmigen Hohlkörpers geformt ist, wobei zwischen den beiden gegenüberliegenden Enden des Klemmblechs ein Spalt ausgebildet ist. Hierdurch ist eine verdrehsichere und zuverlässige Fixierung des Griffteils an dem Kupplungsteil erzielt. Durch die spezielle Ausformung des Klemmblechs ist eine zusätzliche Federwirkung in Richtung der Innenkontur der Aufnahme des Griffteils bewirkt. Das Klemmblech wird unter Überbrückung des Spaltes beim Einbringen in die Aufnahme des Griffteils zusammengepresst, wodurch die Federkräfte bewirkt sind.

In Weiterbildung der Erfindung sind in allen Seitenwänden des Klemmblechs wenigstens zwei in Längsrichtung beabstandet zueinander angeordnete Ausnehmungen eingebracht, deren zwei gegenüberliegende Kanten in entgegengesetzte Richtungen gewölbt ausgebildet sind, wodurch jeweils entgegengesetzt gerichtete Flächenabschnitte 32 gebildet sind, wobei die Flächenabschnitte der nahe dem Gefäßteil angeordneten Ausnehmungen größer dimensioniert sind, als die Flächenabschnitte der nahe dem Griffteil angeordneten Ausnehmungen. Hierdurch ist die Zuverlässigkeit der Verbindung von Griffteil und Kupplungsteil weiter erhöht. Durch die nahe dem Gefäßteil größer dimensionierten Flächenabschnitte ist eine zuverlässige Befestigung auch von als Spritzgussteil hergestellten Griffteilen gewährleistet, bei denen die Aufnahme aus fertigungstechnischen Gründen (Entfernung des Formkerns) konisch ausgebildet ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

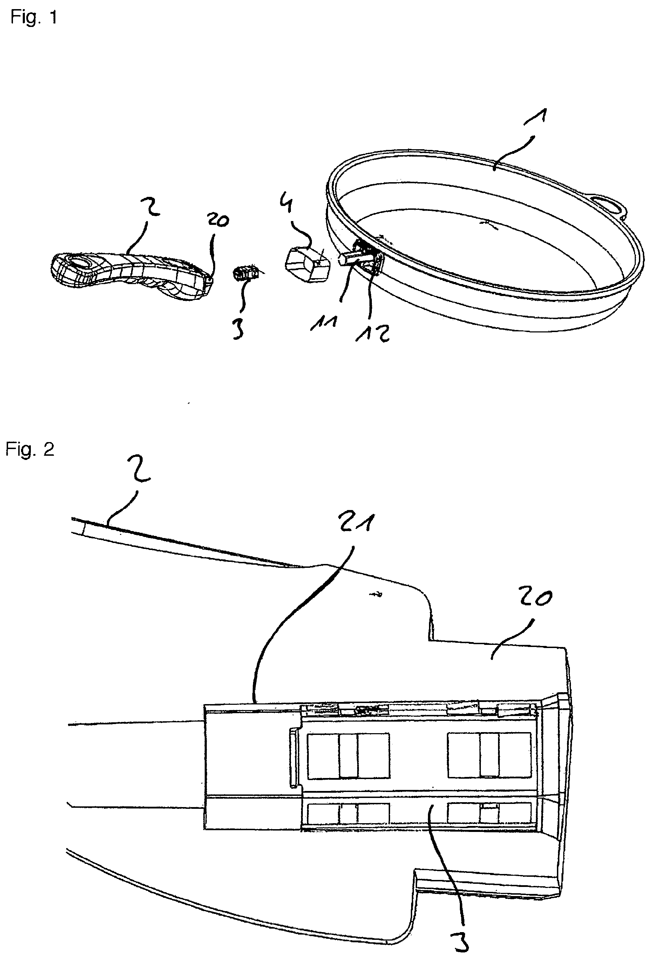

- Figur 1: die schematische räumliche Darstellung eines Kochgeschirrs;
- Figur 2: die Detaildarstellung der Aufnahme des Griffteils mit angeordnetem Klemmblech;

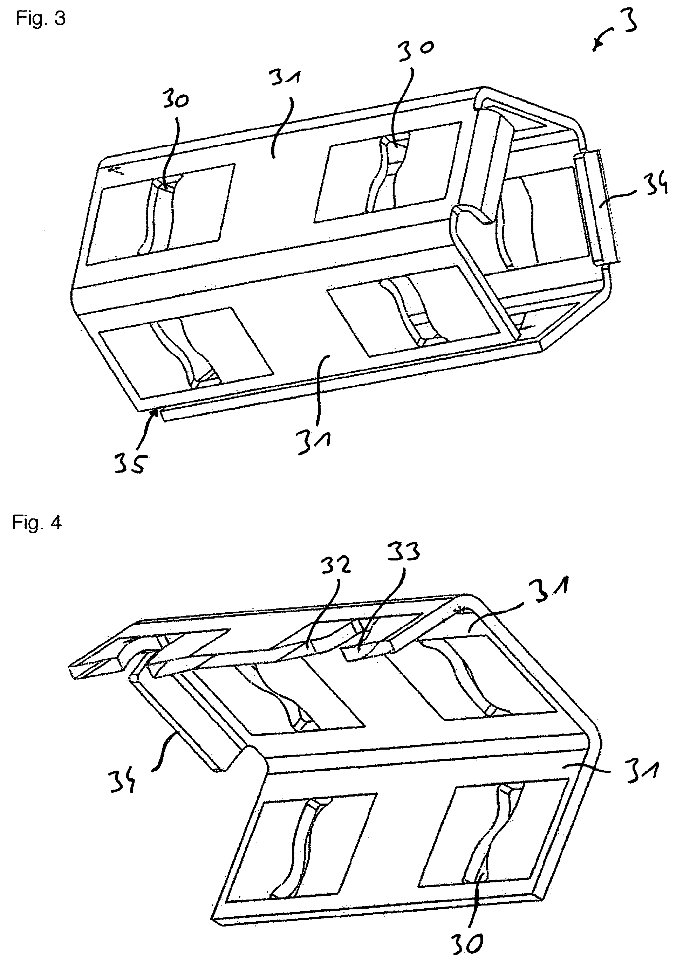

- Figur 3: die schematische räumliche Darstellung des Klemmblechs des Kochgeschirrs aus Figur 2;
- Figur 4: die räumliche Darstellung des Klemmblechs aus Figur 3 im Längsschnitt und

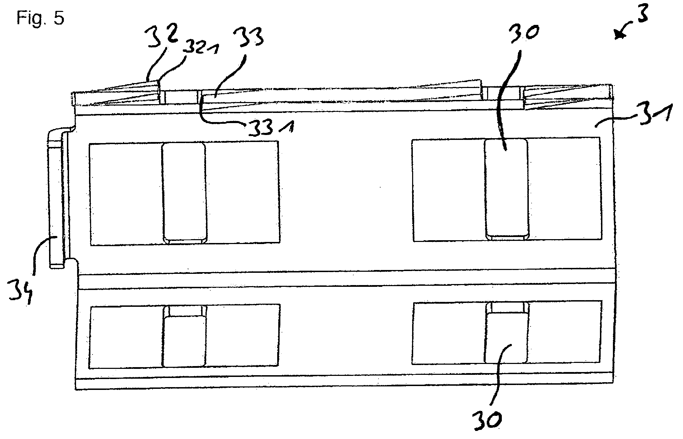

- Figur 5: die Darstellung des Klemmblechs aus Figur 3 in einem weiteren Längsschnitt.

Die als Ausführungsbeispiel gewählte Pfanne besteht im Wesentlichen aus einem Gefäßteil 1, an dem ein Kupplungsteil 11 befestigt ist, mit dem ein Griffteil 2 über ein Klemmblech 3 verbunden ist. Das Kupplungsteil 2 ist im Ausführungsbeispiel in Form eines Bolzenteils mit pentagonförmigem Querschnitt ausgebildet. Das Gefäßteil 1 ist im Ausführungsbeispiel als Aluminiumgussteil ausgebildet, in dem das in Form eines Bolzens ausgebildete Kupplungsteil 11 angegossen ist. Alternativ kann das Kupplungsteil auch als separates Bauteil eingegossen sein. Dabei kann dieses auch aus einem Nicht-Aluminiumwerkstoff gebildet sein. Die Verbindung zwischen Gefäßteil 1 und Griffteil 2 ist von einem Flammschutzteil 4 umgeben.

Das Griffteil 2 ist im Ausführungsbeispiel als Kunststoffspritzgießteil ausgebildet und weist an seinem dem Gefäßteil 1 zugewandten Ende ein im Wesentlichen zylindrisches Ansatzstück 20 auf. Innen ist in dem Ansatzstück 20 zentrisch eine konisch nach innen zulaufende Aufnahme 21 eingebracht, die sich in das Griffteil 2 hinein erstreckt. Die Aufnahme 21 weist im Ausführungsbeispiel einen pentagonförmigen Querschnitt auf. Das Kupplungsteil rahmenförmig umgebend ist an dem Gefäßteil ein Sockelrahmen 12 angeformt, der das Ansatzstück 20 des Griffteils 2 umrahmend aufnimmt und an dessen Außenseite das Flammschutzteil 4 anliegt.

Das Klemmblech 3 ist im Ausführungsbeispiel als Blechbiegeteil ausgebildet, welches einen im Wesentlichen pentagonförmigen Querschnitt aufweist. Dabei ist der Querschnitt nicht geschlossen ausgeführt, wobei zwischen den beiden gegenüberliegenden Enden des Klemmblechs 3 ein Spalt 35 ausgebildet ist. In den fünf Seitenwänden 31 des Klemmblechs 3 sind jeweils zwei in Längsrichtung beabstandet zueinander angeordnete Ausnehmungen 30 eingebracht, deren zwei gegenüberliegende Kanten in entgegengesetzte Richtungen gewölbt ausgebildet sind, wodurch jeweils zwei entgegengesetzt gerichtete federnde Flächenabschnitt 32, 33 gebildet sind. Die nach außen gerichteten Flächenabschnitte 32 sind in einem spitzen Winkel zur Innenkontur der Aufnahme 21 angestellt, während die nach innen gerichteten Flächenabschnitte 33 in einem spitzen Winkel zur Außenkontur des bolzenförmigen Kupplungsteils 11 angestellt sind. Die Flächenabschnitte 32, 33 der nahe dem Gefäßteil 1 angeordneten Ausnehmungen 30 sind dabei größer dimensioniert, als die Flächenabschnitte 32, 33 der nahe dem Griffteil 2 angeordneten Ausnehmungen. An seinem dem Griffteil 2 zugewandten Ende ist an dem Klemmblech 3 an zwei im Wesentlichen gegenüberliegend angeordneten Seitenwänden 31 jeweils ein nach innen abgewinkelter Flügel 34 angeformt.

Bei der Montage des Griffteils 2 an dem Gefäßteil 1 wird zunächst das Klemmblech 3 auf das bolzenförmige Kupplungsteil 11 aufgeschoben, sodass die nach innen abgewinkelten Flügel 34 an dem nach außen gerichteten freien Ende des Kupplungsteils 11 anliegen. Die Außenkanten 331 der nach innen gerichteten Flächenabschnitt 33 sind dabei im spitzen Winkel gegen das bolzenförmige Kupplungsteil 11 angestellt, wodurch eine Abziehhemmung erzielt ist. Nachfolgend wird das Griffteil 2 mit einem das Ansatzstück 2 umgebenden Flammschutzteil 4 versehen und mit seiner Aufnahme 21 auf das Klemmblech 3 aufgeschoben, wodurch das Klemmblech 3 umlaufend gegen das Kupplungsteil 11 gepresst wird, wodurch der Spalt 35 nahezu geschlossen wird. Hierdurch werden die Anpresskräfte der nach innen gerichteten Außenkanten 331 der Flächenabschnitte 33 gegen das Kupplungsteil 1 sowie der nach außen gerichteten Außenkanten 321 der Flächenabschnitte 32 gegen die Innenkontur der Aufnahme 21 verstärkt. Das Griffteil 2 ist so über das Klemmblech 3 fest mit dem Gefäßteil 1 verbunden. Die Verbindung zwischen Griffteil 2 und Gefäßteil 1 ist über das Flammschutzblech 4, welches über den an dem Gefäßteil 1 angeformten Sockelrahmen 12 anliegt, verdeckt.

## Patentansprüche

1. Kochgeschirr, umfassend ein Gefäßteil (1), an dem wenigstens ein Griffteil (2) lösbar befestigt ist, wobei an dem Gefäßteil (1) ein Kupplungsteil (11) befestigt ist, das in eine Aufnahme (21) des Griffteils (2) eingebracht ist, **dadurch gekennzeichnet, dass** zwischen Kupplungsteil (11) und Aufnahme (21) ein Klemmblech (3) mit offenem Querschnitt angeordnet ist, dessen Innenkontur mit der Außenkontur des Kupplungsteils (11) und dessen Außenkontur mit der Innenkontur der Aufnahme (21) korrespondiert, wobei in wenigstens zwei Seitenwänden (31) des Klemmblechs (3) jeweils wenigstens ein zumindest bereichsweise nach außen gerichteter federnder Flächenabschnitt (32) und wenigstens ein nach innen gerichteter Flächenabschnitt (33) angeordnet sind, die in einem spitzen Winkel zur Innenkontur der Aufnahme (21) bzw. zur Außenkontur des Kupplungsteils (11) gerichtet mit ihren äußeren Kanten (321, 331) gegen diese gepresst sind, derart, dass ein Abziehen des Griffteils (2) von dem Kupplungsteil (11) gehemmt ist.

2. Kochgeschirr nach Anspruch 1, **dadurch gekennzeichnet, dass** in jeder Seitenwand (31) wenigstens zwei nach außen gerichtete und zwei nach innen gerichtete federnde Flächenabschnitte (32, 33) angeordnet sind.

3. Kochgeschirr nach Anspruch 2, **dadurch gekennzeichnet, dass** die federnden Flächenabschnitte (32, 33) gewellt ausgebildet sind.

4. Kochgeschirr nach Anspruch 2, **dadurch gekennzeichnet, dass** die wenigstens zwei Flächenabschnitte (32, 33) parallel zueinander angeordnet sind.

5. Kochgeschirr nach einem der vorgenannten Ansprüche, **dadurch gekennzeichnet, dass** in wenigstens zwei Seitenwänden (31) des Klemmblechs (3) jeweils eine Ausnehmung (30) eingebracht ist, bei der zwei gegenüberliegende Kanten in entgegengesetzte Richtungen gewölbt ausgebildet sind, wodurch zwei entgegengesetzt gerichtete federnde Flächenabschnitte (32, 33) gebildet sind.

6. Kochgeschirr nach Anspruch 5, **dadurch gekennzeichnet, dass** die Ausnehmungen (30) rechteckförmig ausgebildet ist.

7. Kochgeschirr nach Anspruch 5 oder 6, **dadurch gekennzeichnet, dass** in allen Seitenwänden (31) des Klemmblechs (3) wenigstens zwei in Längsrichtung beabstandet zueinander angeordnete Ausnehmungen (30) eingebracht sind, deren zwei gegenüberliegende Kanten in entgegengesetzte Richtungen gewölbt ausgebildet sind, wodurch jeweils zwei entgegengesetzt gerichtete federnde Flächenabschnitte (32, 33) gebildet sind, wobei die Flächenabschnitte (32, 33) der nahe dem Gefäßteil (1) angeordneten Ausnehmungen (30) größer dimensioniert sind, als die Flächenabschnitte (32, 33) der nahe dem Griffteil (2) angeordneten Ausnehmungen (30).

8. Kochgeschirr nach einem der vorgenannten Ansprüche, **dadurch gekennzeichnet, dass** an dem Klemmblech (3) an seinem dem Griffteil (2) zugewandten Ende zumindest ein nach innen abgewinkelter Flügel (34) angeformt ist, der an dem nach außen gerichteten freien Ende des Kupplungsteils (11) anliegt.

9. Kochgeschirr nach einem der vorgenannten Ansprüche, **dadurch gekennzeichnet, dass** das Kupplungsteil (11) bolzenförmig mit einem pentagonförmigen Querschnitt ausgebildet ist wobei das Klemmblech (3) in Art eines pentagonförmigen Hohlkörpers geformt ist, wobei zwischen den beiden gegenüberliegenden Enden des Klemmblechs (3) ein Spalt (35) ausgebildet ist.

## Claims

1. Cookware comprising a vessel part (1), to which at least one handle part (2) is detachably fastened, wherein a coupling part (11) is fastened to the vessel part (1), which is inserted in a receptacle (21) of the handle part (2), **characterised in that** a clip sheet (3) with an open cross-section is arranged between the coupling part (11) and the receptacle (21), whose inner contour corresponds to the outer contour of the coupling part (11) and whose outer contour corresponds to the inner contour of the receptacle (21), wherein in at least two side walls (31) of the clip sheet (3), respectively, at least one at least partially outwardly directed resilient surface section (32) and at least one inwardly directed surface section (33) are arranged, which, while being directed at an acute angle to the inner contour of the receptacle (21) or to the outer contour of the coupling part (11), are pressed against same with their outer edges (321, 331) in a way that taking the handle part (2) off the coupling part (11) is inhibited.

2. Cookware according to claim 1, **characterised in that** in each side wall (31) at least two outwardly directed and two inwardly directed resilient surface sections (32, 33) are arranged.

3. Cookware according to claim 2, **characterised in that** the resilient surface sections (32, 33) are corrugated.

4. Cookware according to claim 2, **characterised in that** the at least two surface sections (32, 33) are parallel.

5. Cookware according to one of the previous claims, **characterised in that** in at least two side walls (31) of the clip sheet (3) a recess (30) is respectively inserted, where two opposite edges are curved in opposite directions, whereby two oppositely directed resilient surface sections (32, 33) are formed.

6. Cookware according to claim 5, **characterised in that** the recesses (30) are rectangular.

7. Cookware according to claim 5 or 6, **characterised in that** in all side walls (31) of the clip sheet (3) at least two recesses (30) arranged in a longitudinal direction at a distance to each other are inserted, whose two opposite edges are curved in opposite directions, whereby two oppositely directed resilient surface sections (32, 33) are respectively formed, wherein the surface sections (32, 33) of the recesses (30) arranged close to the vessel part (1) are of a larger dimension than the surface sections (32, 33) of the recesses (30) close to the handle part (2).

8. Cookware according to one of the previous claims, **characterised in that** at least one inwardly angled wing (34) is moulded to the clip sheet (3) at its end facing the handle part (2), which rests on the outwardly directed free end of the coupling part (11).

9. Cookware according to one of the previous claims, **characterised in that** the coupling part (11) is bolt-shaped with a pentagon-shaped cross-section, wherein the clip sheet (3) is formed in the manner of a pentagon-shaped hollow body, wherein between the two opposite ends of the clip sheet (3) a gap (35) is formed.

## Revendications

1. Batterie de cuisine comprenant un récipient (1) contre lequel est fixée une poignée (2) de manière détachable, sachant que contre le récipient (1) est fixé un accouplement (11) qui est introduit dans un réceptacle (21) de la poignée (2), **caractérisée en ce qu'**entre l'accouplement (11) et le réceptacle (21) est agencée une plaque de bridage (3) de section ouverte, dont le contour intérieur épouse le contour extérieur de l'accouplement (11) et dont le contour extérieur épouse le contour intérieur du réceptacle (21), sachant que dans au moins deux parois latérales (31) de la plaque de bridage (3) sont agencés respectivement au moins un segment (32) de surface amortisseur orienté au moins localement vers l'extérieur et au moins un segment (33) de surface orienté vers l'intérieur, segments qui, formant un angle aigu par rapport au contour intérieur du réceptacle (21) et/ou au contour extérieur de l'accouplement (11), sont sertis contre eux par leurs arêtes extérieures (321, 331) de sorte à empêcher de détacher la poignée (2) de l'accouplement (11).

2. Batterie de cuisine selon la revendication 1, **caractérisée en ce que** dans chaque paroi latérale (31) sont agencés au moins deux segments superficiels regardant vers l'extérieur et deux segments superficiels (32, 33) amortisseurs regardant vers l'intérieur.

3. Batterie de cuisine selon la revendication 2, **caractérisée en ce que** les segments superficiels (32, 33) amortisseurs sont configurés ondulés.

4. Batterie de cuisine selon la revendication 2, **caractérisée en ce qu'**au moins deux segments superficiels (32, 33) sont agencés réciproquement parallèles.

5. Batterie de cuisine selon l'une des revendications précédentes, **caractérisée en ce que** dans au moins deux parois latérales (31) de la tôle de bridage (3) a été ménagé un évidement (30) où deux arêtes se faisant face sont incurvées en sens opposés, ce qui forme deux segments superficiels (32, 33) amortisseurs regardant dans des directions opposées.

6. Batterie de cuisine selon la revendication 5, **caractérisée en ce que** les évidements (30) sont configurés rectangulaires.

7. Batterie de cuisine selon la revendication 5 ou 6, **caractérisée en ce que** dans toutes les parois latérales (31) de la plage de bridage (3) au moins deux évidements (30) ont été ménagés distants l'un de l'autre dans le sens longitudinal, évidements dont les deux arêtes se faisant face sont configurées incurvées en directions opposées, ce qui a pour effet de former deux segments superficiels (32, 33) amortisseurs regardant en directions opposées, sachant que les segments superficiels (32, 33) des évidements (30) agencés près du récipient (1) sont dimensionnés plus grands que les segments superficiels (32, 33) des évidements (30) agencés près de la poignée (2).

8. Batterie de cuisine selon l'une des revendications précédentes, **caractérisée en ce que** contre la plaque de bridage (3), à son extrémité regardant la poignée (2), est modelée au moins une ailette (34) coudée vers l'intérieur, qui applique contre l'extrémité de l'accouplement (11) regardant vers l'extérieur.

9. Batterie de cuisine selon l'une des revendications précédentes, **caractérisée en ce que** l'accouplement (11) est configuré en forme de goujon de section pentagonale, sachant que la plaque de bridage (3) est modelée en forme de corps creux pentagonal, sachant qu'une fente (35) a été configurée entre les deux extrémités se faisant face de la plaque de bridage (3).
